Europäisches Patentamt

European Patent Office

Office européen des brevets

(19)

(11) Veröffentlichungsnummer: **0 023 255**
**A1**

(12) **EUROPÄISCHE PATENTANMELDUNG**

(21) Anmeldenummer: **80103201.2**

(22) Anmeldetag: **10.06.80**

(51) Int. Cl.³: **G 03 B 23/00**

(30) Priorität: **28.07.79 DE 2930800**

(43) Veröffentlichungstag der Anmeldung:
**04.02.81 Patentblatt 81/5**

(84) Benannte Vertragsstaaten:
**BE FR IT NL SE**

(71) Anmelder: **Rollei-Werke Franke & Heidecke GmbH + Co KG**
**Salzdahlumer Strasse 196**
**D-3300 Braunschweig(DE)**

(72) Erfinder: **Sobotta, Reinhard**
**Schreiberkamp 9**
**D-3300 Braunschweig(DE)**

(72) Erfinder: **Stiller, Armin**
**Mannheimstrasse 49**
**D-3300 Braunschweig(DE)**

(74) Vertreter: **Pretzell, Hellmut, Dipl.-Ing.**
**Salzdahlumer Strasse 196**
**D-3300 Braunschweig(DE)**

(54) **Projektor mit einer Bedienungseinrichtung.**

(57) Projektor mit einer Bedienungseinrichtung mit tragbarem Fernbedienungsteil mit Bedienungstasten, das in einem dafür vorgesehenen Raum im Projektorgehäuse einsetzbar ist. Am Ort des sonst für die Kabelfernbedienung vorgesehenen Raumes (14) im Projektor kann alternative eine Signalempfänger-Signalfernbedienungseinrichtung angeordnet werden. Dabei liegen die Bedienungstasten (18) für die Nahbedienung des Projektors, gleichgültig, ob die Kabelfernbedienungseinrichtung oder die Signalempfänger-Signalgeberfernbedienungseinrichtung gerade verwendet wird, jeweils am gleichen Ort im Projektor.

Fig. 2

R O L L E I - W E R K E          30.04.1980
  Franke & Heidecke            A 1163 EU
  GmbH & Co KG

Projektor mit einer Bedienungseinrichtung

Die Erfindung betrifft einen Projektor mit einer Bedienungseinrichtung mit einem tragbaren Fernbedienungsteil mit Bedienungstasten, das in einem dafür vorgesehenen Raum im Projektorgehäuse einsetzbar ist.

Projektoren mit Fernbedienung sind bekannt. Bei diesen Projektoren ist das Fernbedienungsteil, welches die Bedienungstasten aufweist, über ein Kabel mit dem Projektor verbunden. Dieses Verbindungskabel kann als optisch unschön und darüber hinaus auch als lästig empfunden werden, weil es im Fußraum, der während der Projektion wesentlich dunkler als die Leinwand ist, liegt und deshalb leicht übersehen wird, mit der Folge, daß man darüber stolpern und damit auch den Projektor vom Tisch reißen könnte.

Bekannt sind ferner aus Sender und Empfänger bestehende Zusatzgeräte, die als Fernbedienung verwendbar sind. Diese Zusatzgeräte weisen den Nachteil auf, daß der Empfänger über eine Leitung von außen mit dem Projektor verbunden werden muß, daß deshalb neben diesem eine zusätzliche Stellfläche erforderlich ist und daß außerdem die gesamte Anordnung sperrig und optisch unschön ist. Hinzu kommt der Nachteil, daß diese Zusatzeinrichtung auch nicht ohne zusätzlichen Kofferraum im Projektorkoffer transportiert oder abgestellt werden kann, was ganz allgemein die Handhabung erschwert.

Aufgabe der Erfindung ist es, einen Projektor mit einer Bedienungseinrichtung zu schaffen, welche je nach den Wünschen des Anwenders sowohl für Kabelfern- oder -nahbedienungszwecke als auch für drahtlose Fern- oder -nahbedienungszwecke ohne zusätzlichen Raumbedarf im Projektor verwendbar ist und deren Herstellung in kostengünstiger Weise aufgenommen werden kann.

Diese Aufgabe ist gemäß der Erfindung dadurch gelöst, daß das Fernbedienungsteil einen Signalgeber als tragbares kabelloses Fernbedienungsteil und einen Signalempfänger aufweist, die derart ausgebildet sind, daß beide gleichzeitig anstelle des Kabelfernbedienungsteils in den sonst für das Kabelfernbedienungsteil vorgesehenen Raum des Projektorgehäuses einsetzbar sind, und daß der Signalempfänger über die für das Fernbedienungskabel vorgesehene Steckbuchse anschließbar ist.

Mit der Erfindung wird zunächst der Vorteil erzielt, daß eine Fernbedienung geschaffen wurde, welche kein zusätzliches Kabel für den Empfänger erfordert. Die Erfindung bringt ferner den Vorteil, daß diese Fernbedienung voll in den Projektor integrierbar ist, so daß der Signalgeber und der Signalempfänger in dem sonst für das Kabelfernbedienungsteil vorgesehenen Raum untergebracht werden können.

Ein weiterer wesentlicher Vorteil der Erfindung liegt darin, daß die geschaffene Fernbedienung keine besonderen Umbauteile und auch keine Umbauarbeiten erfordert, sondern in denkbar einfacher Weise vom Kunden oder vom Projektorbenutzer nachrüstbar bzw. vom Verkäufer ausrüstbar ist. Dazu sind lediglich das die Fernbedienungstasten enthaltende Fernbedienungsteil und das zugehörige Kabel der konventionellen Fernbedienungseinrichtung zu entfernen, und in den Kabelaufbewahrungsraum der erfindungsgemäßen
Signalempfänger einzusetzen und mit der vorhandenen Anschlußbuchse zu verbinden.

Sollte im übrigen irgendwann einmal der Signalgeber oder
der Signalempfänger der erfindungsgemäßen Fernbedienungseinrichtung gewartet oder repariert werden müssen, so
kann selbstverständlich die alte Kabelfernbedienungseinrichtung während dieser Zeit wiederverwendet werden, was
als weiterer Vorteil der Erfindung anzusehen ist.

In einer vorteilhaften Ausbildung der Erfindung reicht
wenigstens der Sensor des Signalempfängers bis in die
Ebene eines den Raum durch Aufnahme der Bedienungseinrichtung abschließenden Deckels heran. Dadurch wird eine
besonders sichere Übertragung der Signale des Signalgebers erreicht, da in dieser Ebene auch indirekte diffus
abgestrahlte Strahlungswellen auftreffen und so vom Signalempfänger verarbeitet werden können.

Nach einer Weiterbildung der Erfindung ist der Signalgeber zur Aufnahme der Bedienungstastatur des Kabelfernbedienungsteils ausgebildet. Diese Weiterbildung der Erfindung bringt den Herstellungsvorteil mit sich, daß sowohl
für die Verwendung der konventionellen Kabelfernbedienungseinrichtung als auch für die Verwendung der erfindungsgemäßen Bedienungseinrichtung bei der Produktion
ein und dieselbe Bedienungstastatur verwendet werden kann.

Nach einer anderen Weiterbildung der Erfindung ist der
Signalgeber ein IR-Geber und der Signalempfänger ein IR-
Empfänger. Im Rahmen der Erfindung können aber auch Ultraschallgeber und Ultraschallempfänger verwendet werden.

Zweckmäßigerweise ist der Signalempfänger kürzer als die Länge des Kabelaufbewahrungsraumes ausgebildet und an seiner der Kabelsteckbuchse zugewandten Seite ist ein vorstehender Stecker ausgebildet. Diese Weiterbildung ist besonders dann zweckmäßig, wenn die Steckbuchse in einer Stirnfläche des Kabelaufbewahrungsraumes ausgebildet ist. Es ist bei der beschriebenen Ausbildung des Signalgebers nämlich möglich, diesen senkrecht zu seiner Längsachse in den Kabelaufbewahrungsraum einzuführen und dann in Richtung seiner Längsachse zur Steckbuchse hin soweit zu verschieben, bis der am Signalempfänger angeordnete Stecker in die Steckbuchse eingreift und die gewünschten Verbindungen hergestellt sind.

Nach einer anderen Weiterbildung der Erfindung weist der Signalempfänger eine Ausnehmung auf, in welche der Signalgeber einsetzbar ist. Vorteilhafterweise stehen Kontaktstifte vom Signalempfänger in die Ausnehmung vor. Beim Einsetzen des Signalgebers in die Ausnehmung dringen diese Kontaktstifte in Buchsen des Signalgebers ein und versorgen diesen mit elektrischem Strom.

Vorzugsweise sind das Senderauge am Signalgeber und zumindest ein Teil des Sensors am Signalempfänger an zwei Bereichen ausgebildet, welche bei in den Signalempfänger eingesetztem Signalgeber einander gegenüberliegen. Diese Weiterbildung der Erfindung ermöglicht die ortsfeste Verwendung des Signalgebers als Bedienungsteil.

Nach einer weiteren vorteilhaften Ausbildung der Erfindung steht vom Signalempfänger in dessen Ausnehmung ein weiterer Kontaktstift vor, welcher beim Einsetzen des Signalgebers mit einer an diesem ausgebildeten Buchse kontaktiert und die Signalverbindung zwischen Signalempfänger und Signalgeber herstellt. Dadurch kann der Signalgeber mit dem Senderauge vom Sensor des Signalempfängers abgewandt in der Ausnehmung eingesetzt werden. Die Signalübertragung erfolgt bei dieser örtlichen Bedienung über den weiteren Kontaktstift und ist damit besonders sparsam im Energieverbrauch.

In einer weiteren vorteilhaften Ausbildung erfolgt die Signalverbindung über den obigen weiteren Kontaktstift über codierte Signale. Dies hat den Vorteil, daß über eine einzige Kontaktverbindung nahezu beliebig viele Funktionen in Form von verschlüsselten Signalen übertragen werden können. Es werden daher so viele Kontaktstifte eingespart, wie Funktionen vom Signalgeber in den Signalempfänger übertragen werden. Die Codierungs- und Decodierungseinrichtungen sind im Signalgeber und im Signalempfänger für die Verwendung als IR-Fernbedienung ohnehin vorhanden, so daß keine zusätzlichen Kosten entstehen.

Die Erfindung ist im folgenden anhand eines Ausführungsbeispiels und in Verbindung mit der Zeichnung näher beschrieben. Im einzelnen zeigen:

Fig. 1    einen Schnitt durch einen Teil eines Projektors mit einer herkömmlichen Kabelfernbedienungseinrichtung,

Fig. 2    einen der Fig. 1 ähnlichen Schnitt durch einen Teil eines Projektors mit einer erfindungsgemäßen Fernbedienungseinrichtung und

Fig. 3    einen Schnitt durch eine weitere Ausführungsform der Erfindung mit einem weiteren Kontaktstift zwischen Signalgeber und Signalempfänger.

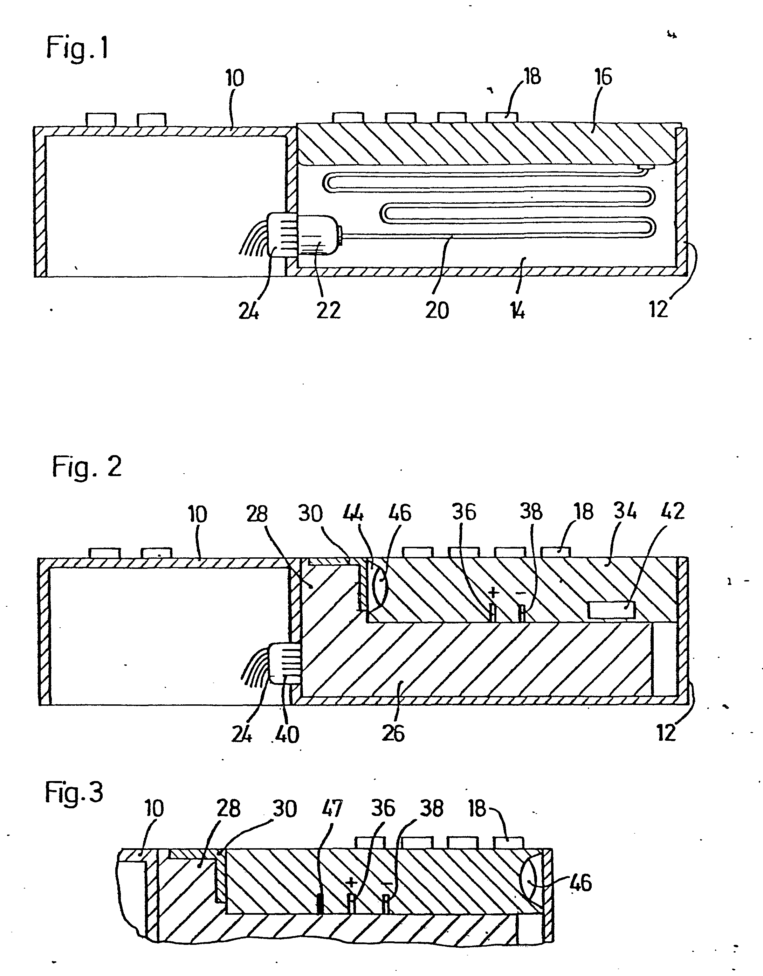

In Fig. 1 sieht man eine geschnittene Projektorseitenwange 10 und eine Gehäusewand 12, welche einen Kabelaufbewahrungsraum 14 bildet. In den oberen Teil dieses Kabelraumes 14 ist ein Fernbedienungshandstück 16 eingesetzt, welches Bedienungstasten 18 aufweist. Das Fernbedienungshandstück 16 ist über ein Kabel 20, dessen Stecker 22 und eine Steckbuchse 24 mit dem Projektor verbunden. Über diese Steckbuchsenverbindung 22, 24 wird einerseits das Fernbedienungshandstück 16 mit Strom versorgt, und andererseits werden über diese Steckverbindung die Fernbedienungssignale an den Projektor übertragen.

In der Fig. 2 sieht man wiederum die geschnittene Projektorseitenwange 10, die Gehäusewand 12, welche den Kabelaufbewahrungsraum 14 umschließt, und die ebenfalls im Schnitt dargestellte Steckbuchse 24. Im Kabelraum 14 ist jetzt ein IR-Signalempfänger 26 angeordnet, welcher im dargestellten Längsschnitt eine abgewinkelte Form hat, dessen in der Zeichnung linker Winkelabschnitt 28 nach oben vorsteht. An einem Teil der Oberseite dieses Winkelabschnitts 28 und an einem Teil der nach rechts gewandten Seite dieses Winkelabschnitts 28 ist eine Sensorfläche 30 ausgebildet. Die Oberseite des Winkelabschnitts 28 des IR-Empfängers liegt etwa auf gleicher Höhe wie die Oberseite der Projektor-Seitenwange 10.

In der durch das Basisteil des IR-Empfängers und durch dessen Winkelabschnitt 28 gebildeten Ausnehmung ist ein IR-Geber 34 angeordnet, welcher im wesentlichen einen rechtwinkligen Querschnitt aufweist. Dieser IR-Geber liegt mit seiner Unterseite auf der Oberseite des Basisteils des IR-Empfängers 26 auf. Dabei dringen zwei von dem IR-Empfänger 26 nach oben vorstehende Kontaktstifte 36 und 38 in komplementär ausgebildete Buchsen (nicht dargestellt) des IR-Gebers 34 ein und versorgen diese mit elektrischem Strom.

An der in Fig. 2 linken Seite des IR-Gebers 34 ist in einer Ausnehmung 44 ein Senderauge 46 angeordnet. Dieses Senderauge 46 befindet sich in der in Fig. 2 gezeigten Konstellation, wenn der IR-Geber 34 in dem Kabelaufbewahrungsraum 14 auf den IR-Empfänger 26 aufgesetzt ist, gegenüber der Sensorfläche 30.

Die beschriebene Vorrichtung arbeitet in gleicher Weise wie die bekannte, in Fig. 1 dargestellte Fernbedienungseinrichtung. Wenn das Fernbedienungshandstück, nämlich der IR-Geber 34, in den Kabelaufbewahrungsraum 14 eingesetzt ist, befindet sich das Senderauge 46 gegenüber der Sensorfläche 30. Diese empfängt somit direkt sämtliche Bedienungssignale. Dabei erfolgt die Stromversorgung des IR-Empfängers 26 über die Steckbuchse 24. Über die Kontaktstifte 36 und 38 wird gleichzeitig der IR-Geber 34 mit Strom versorgt, wobei seine Batterie 42 automatisch abgeschaltet ist.

Zur Fernbedienung des Projektors muß lediglich das Bedienungshandstück, nämlich der IR-Geber 34 herausgenommen werden. Dabei wird automatisch die Batterie 42 eingeschaltet.

Der Sensor 30 erstreckt sich nicht nur über einen Teil der vertikalen Wand des Winkelabschnitts 28 des IR-Empfängers 26, sondern auch über einen Teil von dessen Oberfläche. Auf diese Weise ist gewährleistet, daß der Sensor 30 und damit der IR-Empfänger 26 sicher die Signale des IR-Gebers empfängt, unabhängig davon, wo und teilweise auch wie im Raum der Signalgeber 34 bedient wird.

BAD ORIGINAL

Die Fig. 3 zeigt einen Schnitt durch einen Teil einer weiteren Ausführungsform der Erfindung, wobei, soweit möglich, für entsprechende Teile die gleichen Bezugszeichen verwendet wurden. In der Ausnehmung des Signalempfängers 26 stehen bei dieser Ausführungsform wiederum zwei Kontaktstifte 36 und 38 vor, welche bei eingesetztem Signalgeber 34 mit entsprechenden Ausnehmungen in diesem kontaktieren und ihn mit elektrischer Spannung versorgen. Der Signalgeber 34 ist bei dieser Ausführungsform mit dem Senderauge 46 vom Sensor 30 abgewandt in der Ausnehmung eingesetzt. Durch diese Darstellung soll zum Ausdruck gebracht werden, daß bei der Verwendung der Bedienungseinrichtung als örtliche Bedienung die Signalübertragung nicht wie in Fig. 2 dargestellt über das Senderauge 46 und die Sensorfläche 30 erfolgt. Diese Signalübertragung erfolgt vielmehr über einen weiteren Kontaktstift 47, welcher von dem Signalempfänger 26 in dessen Ausnehmung vorsteht. An dem Signalgeber 34 ist eine entsprechend ausgebildete Buchse vorgesehen, welche bei eingesetztem Signalgeber 34 mit dem weiteren Kontaktstift 47 kontaktiert, wodurch die Signalverbindung zwischen Signalempfänger und Signalgeber hergestellt ist. In dem zusammengesetzten Zustand ist das Senderauge automatisch abgeschaltet. Diese Ausführungsform der Erfindung weist den Vorteil auf, daß sie besonders sparsam im Energieverbrauch ist.

Die Signalübertragung kann bei dieser Ausführungsform vorzugsweise über codierte Signale erfolgen, wodurch entsprechend viele Kontaktstifte eingespart werden können.

0023255

ROLLEI - WERKE                    30.04.1980
   Franke & Heidecke              A 1163 EU
   GmbH & Co KG

Patentansprüche

1.  Projektor mit einer Bedienungseinrichtung, mit tragbarem Fernbedienungsteil mit Bedienungstasten, das
    in einem dafür vorgesehenen Raum im Projektorgehäuse
    einsetzbar ist, dadurch gekennzeichnet, daß das Fernbedienungsteil einen Signalgeber (34) als tragbares
    kabelloses Fernbedienungsteil und einen Signalempfänger (26) aufweist, die derart ausgebildet sind, daß
    beide gleichzeitig anstelle des Kabelfernbedienungsteils (16) in den sonst für das Kabelfernbedienungsteil (16) vorgesehenen Raum (14) des Projektorgehäuses einsetzbar sind, und daß der Signalempfänger (26)
    über die für das Fernbedienungskabel (20) vorgesehene Steckbuchse (24) anschließbar ist.

2.  Projektor nach Anspruch 1, dadurch gekennzeichnet,
    daß der Signalempfänger (26) wenigstens mit seinem
    Sensor (30) bis in die Ebene eines den Raum (14)
    durch Aufnahme der Bedienungseinrichtung abschließenden Deckels heranreicht.

3.  Projektor nach Anspruch 1 oder 2, dadurch gekenn-
    zeichnet, daß der Signalgeber (34) zur Aufnahme der
    Bedienungstastatur (18) des Kabelfernbedienungs-
    teils (16) ausgebildet ist.

BAD ORIGINAL

4. Projektor nach Anspruch 1 oder 3, dadurch gekennzeichnet, daß der Signalgeber ein IR-Geber (34) und der Signalempfänger ein IR-Empfänger (26) ist.

5. Projektor nach einem der Ansprüche 1-3, dadurch gekennzeichnet, daß der Signalgeber ein Ultraschallgeber und der Signalempfänger ein Ultraschallempfänger ist.

6. Projektor nach einem der Ansprüche 1-5, dadurch gekennzeichnet, daß der Signalempfänger (26) kürzer als die Länge des Kabelaufbewahrungsraumes (14) ausgebildet ist und daß an seiner der Kabelsteckbuchse (24) zugewandten Seite ein vorstehender Stecker (40) ausgebildet ist.

7. Projektor nach einem der Ansprüche 1-5, dadurch gekennzeichnet, daß der Signalempfänger (26) eine Ausnehmung aufweist, in welche der Signalgeber (34) einsetzbar ist.

8. Projektor nach Anspruch 7, dadurch gekennzeichnet, daß vom Signalempfänger (26) in dessen Ausnehmung Kontaktstifte (36, 38) vorstehen, welche beim Einsetzen des Signalgebers (34) mit an diesen ausgebildeten Buchsen kontaktieren und ihn mit elektrischem Strom versorgen.

9. Projektor nach einem der Ansprüche 1-8, dadurch gekennzeichnet, daß ein Senderauge (46) am Signalgeber (34) zumindest ein Teil eines Sensors (30) am Signalempfänger (26) an zwei Bereichen ausgebildet sind, welche bei in den Signalempfänger (26) eingesetztem Signalgeber (34) einander gegenüberliegen.

10. Projektor nach einem der Ansprüche 1-7, dadurch gekennzeichnet, daß vom Signalempfänger (26) in dessen Ausnehmung ein weiterer Kontaktstift (47) vorsteht, welcher beim Einsetzen des Signalgebers (34) mit einer an diesem ausgebildeten Buchse kontaktiert und die Signalverbindung zwischen Signalempfänger (26) und Signalgeber (34) herstellt.

11. Projektor nach Anspruch 10, dadurch gekennzeichnet, daß die Signalverbindung über codierte Signale erfolgt.

Fig.1

Fig. 2

Fig.3

**Europäisches Patentamt**

**EUROPÄISCHER RECHERCHENBERICHT**

Nummer der Anmeldung

EP 80 10 3201

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | PHOTO-TECHNIK UND -WIRTSCHAFT, Band 23, Nr. 1, Januar 1972, Seiten 19-21 Berlin, DE. "Direkte Dia-Anwahl und vollautomatische Projektion" | 1,3,5 |
| | -- | |
| | US - A - 3 475 092 (D.M. HARVEY) * Spalten 4-7; Figuren 1-6 * | 1 |
| | -- | |
| | DE - C - 1 218 180 (ELBE-KAMERA GmbH) * Spalten 2,3; Figuren 1,2 * | 1,5 |
| | -- | |
| | DE - B - 1 109 407 (E. ZILLMER) * Spalten 1-3; Figuren 1-3 * | 1 |
| | -- | |
| | FUNKSCHAU, Band 51, Nr. 11, Mai 1979, Seiten 645-649 München, DE. "Infracenter 699- ein fernbedienbares 4-Wege-Kompaktgerät" | 1,3,4, 7,9 |
| | -- | |
| | DE - A - 2 501 890 (SABA GmbH) * Spalten 2-4; Figuren 1-5 * | 1,3,5, 7,9 |
| | -- | |
| A | FR - A - 1 378 476 (SAWYERS RESEARCH DEVELOPMENT CORPORATION) * Seite 2, Spalte 2; Seiten 3,4; Figuren 1,2 * | 1 |
| | ---- | |

**KLASSIFIKATION DER ANMELDUNG (Int Cl.3)**

G 03 B 23/00

**RECHERCHIERTE SACHGEBIETE (Int Cl.3)**

G 03 B 23/00
          23/02
          21/00
H 03 J   9/04
          9/06

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 23-11-1980 | BOEYKENS |

EPA form 1503.1   06.78